# EUROPEAN PATENT APPLICATION

(11) **EP 2 799 962 A2**
(43) Date of publication of application: **05.11.2014**
(21) Application number: 14154649.9
(22) Date of filing: 11.02.2014
(51) Int. Cl.: G06F 3/042

(54) **Motion sensing device and motion sensing system comprising it**

(30) Priority: 29.04.2013 US 201361817306 P; 22.10.2013 CN 201310501209
(71) Applicant: Lite-On Semiconductor Corporation, New Taipei City 231 (TW)
(72) Inventor: Lin, Chih-Neng, 116 Taipei City (TW)
(74) Representative: Becker Kurig Straus

(57) **Abstract**

A motion sensing device, for a motion sensing system having a light emitting device for generating light of a certain frequency range, includes a motion sensing area which comprises sensor array, for sensing light of the frequency range to generate two-dimensional motion information of a first axis and a second axis; and a distance sensing area positioned between the motion sensing area and the outer edge of the motion sensing device, for sensing light of the frequency range to generate distance information of a third axis.

## Description

### Field of the Invention

The present invention relates to a motion sensing device and motion sensing system comprising it, and more particularly, to a motion sensing device capable of sensing a motion trace and the motion sensing device thereof.

### Background of the Invention

Due to their scientific and technological advancement, computer systems are viewed as necessities for ordinary people in their daily lives; from traditional functions, such as word processing and program executing, to modern multimedia processing, and computer games, etc. Thus, technology of the input apparatus also has improved.

A pointing device is utilized for transforming motions of a user into signals via a motion sensor capable of sensing a motion trace for an electronic device having computing capacity, so as to control the movement of graphical cursers or pointers on display screens, to select objects on display screens with a graphical user interface, and to perform control functions displayed on the screen, allowing the user direct interaction with the computer system. Thus, how to realize the motion sensor with high accuracy becomes a topic to be discussed.

### Summary of the Invention

This in mind, the application aims at providing a motion sensing device capable of sensing a motion trace and motion sensing system comprising said device for solving the abovementioned problem.

This is achieved by a motion sensing device capable of sensing a motion trace and a motion sensing system according to claims 1 and 10. The dependent claims pertain to corresponding further developments and improvements.

As will be seen more clearly from the detailed description following below, the claimed motion sensing device, for a motion sensing system having a light emitting device for generating light of a first frequency range, comprises a motion sensing area which comprises a sensor array, for sensing light of the first frequency range to generate two-dimensional motion information of a first axis and a second axis; and a distance sensing area, positioned between the motion sensing area and the outer edge of the motion sensing device, for sensing light of the first frequency range to generate distance information of a third axis.

### Brief Description of the Drawings

FIG. 1 is a schematic diagram of a motion sensing system according to an embodiment of the present invention.
FIG. 2 is a schematic diagram of another motion sensing system according to an embodiment of the present invention.
FIG. 3 is a schematic diagram of still another motion sensing system according to an embodiment of the present invention.

### Detailed Description

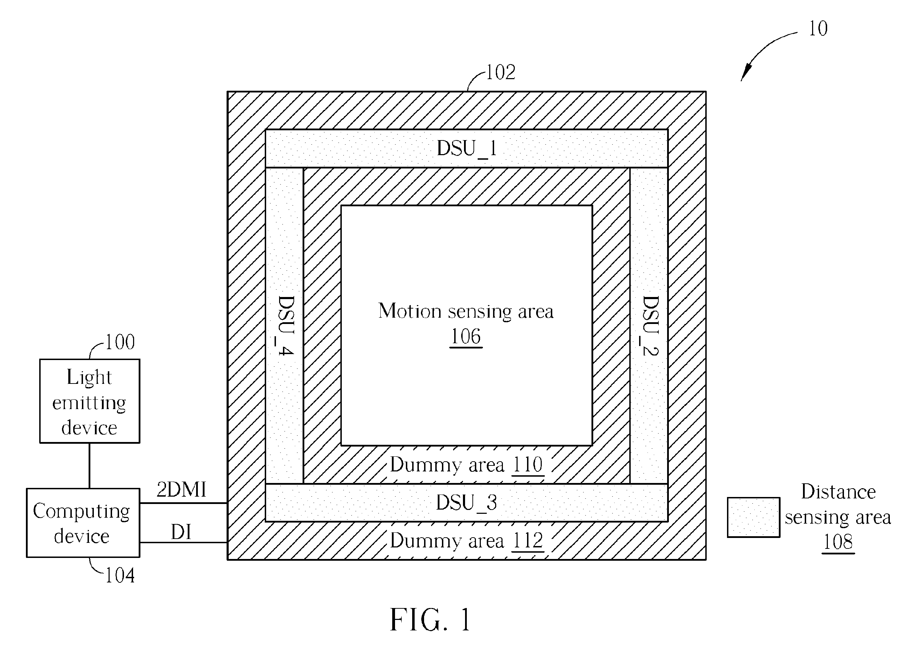

Please refer to FIG. 1, which is schematic diagram of a motion sensing system 10 according to an embodiment of the present invention. The motion sensing system 10 is utilized for sensing a motion trace of an object (e.g. a gesture of a user) within a detecting range DR. As shown in FIG.1, the motion sensing system 10 comprises a light emitting device 100, a motion sensing device 102 and a computing device 104. The light emitting device 100 is utilized for emitting light LIG of a frequency range FR1. For example, the light emitting device may be a light emitting diode (LED) capable of generating the light LIG of the frequency range of the infrared (e.g. the wavelength of the light LIG is 850nm or 940nm). The motion sensing device 102 comprises a motion sensing area 106, a distance sensing area 108 and dummy areas 110 and 112 and is utilized for receiving the light of the frequency range FR1 (e.g. the light generated by the object reflects the light LIG), to generate a two-dimensional (2D) motion information 2DMI and a distance information DI. The computing device 104 is coupled to the light emitting device 100 and the motion sensing device 102 for controlling the light emitting device 100 and the motion sensing device 102 and determining the motion trace of the object according to the 2D motion information 2DMI and the distance information DI. As a result, the motion sensing system 10 can precisely determine the motion trace of the moves of the object within the detecting range DR via the motion sensing device 102.

In detail, the motion sensing area 106 comprises a light sensing component array (e.g. an N*N pixel array) capable of sensing the light of the frequency range FR1. For example, the top of the light sensing component array may comprise a coating for filtering the light and only allowing the light of the frequency range FR1 to pass. Via the control of the computing device 104, the motion sensing area 106 outputs the 2D motion information 2DMI of a first axis and a second axis (e.g. X-axis and Y-axis) in the detecting range DR to the computing device 104. The computing device 104 acquires the position information of the object (e.g. a hand and/or a finger of the user) at the X-axis and Y-axis, therefore, so as to determine the motion trace of the object on the 2D plane. According to the 2D motion information 2DMI, the computing device 104 also can determine relative distance information of the object of a third axis (e.g. Z-axis) within the detecting range DR (e.g. the variations of the position of the object at the Z-axis).

The distance sensing area 108 is positioned between the motion sensing area 106 and the outer edge of the motion sensing device for sensing the light of the frequency range FR1, to generate the distance information DI to the computing device 104. The distance sensing area 108 comprises distance sensing units DSU_1-DSU_4 which are configured at a top side, a right side, a bottom side and the left side of the motion sensing area 106, respectively. The distance sensing units DSU_1-DSU_4 are utilized for sensing the intensity of the light of the frequency range FR1, to generate corresponded currents as the distance information DI. For example, the distance sensing units DSU_1-DSU_4 may be light sensing components arranged in a row (e.g. a 1*n pixel array), and is not limited herein. The dummy areas 110, 112 are positioned between the motion sensing area 106 and the distance sensing area 108 and between the distance sensing area 108 and the outer edge of the motion sensing device, respectively, for reducing the crosstalk between the motion sensing area 106 and the distance sensing area 108. As a result, the computing device 104 determines the motion trace of the object on the 2D plane within the detecting range DR (e.g. the movement of the hand in all directions) according to the 2D motion information 2DMI; and determines the motion trace of the object at the Z-axis within the detecting range DR (e.g. the push/pull gesture) according to the distance information DI. In other words, the motion sensing system 10 accurately determines the motion trace performed by the object within the detecting range DR via the motion sensing device 102.

Please note that, the computing device 104 may adjust the number of the distance sensing units DSU_1-DSU_4 that are enabled according to the size of the detecting range DR. For example, when the detecting range DR is small, the motion sensing system 10 may only enable the distance sensing unit DSU_1. In such a condition, the motion sensing system 10 only uses the distance sensing unit DSU_1 to sense the intensity of the light of the frequency range FR1 and to output the corresponded current as the distance information DI. When the detecting range DR is enlarged, the computing device 104 may enable the distance sensing units DSU_1 and DSU_2 (i.e. increase the number of the distance sensing units DSU_1-DSU_4 that are enabled), for increasing the sensitivity of the distance sensing area 108, and so on. According to difference applications and design concepts, those with ordinary skill in the art may observe appropriate alternations and modifications. For example, the computing device 104 may adjust the number of the distance sensing units DSU_1-DSU_4 that are enabled according to the signal-to-noise ratio (SNR) of the distance information DI.

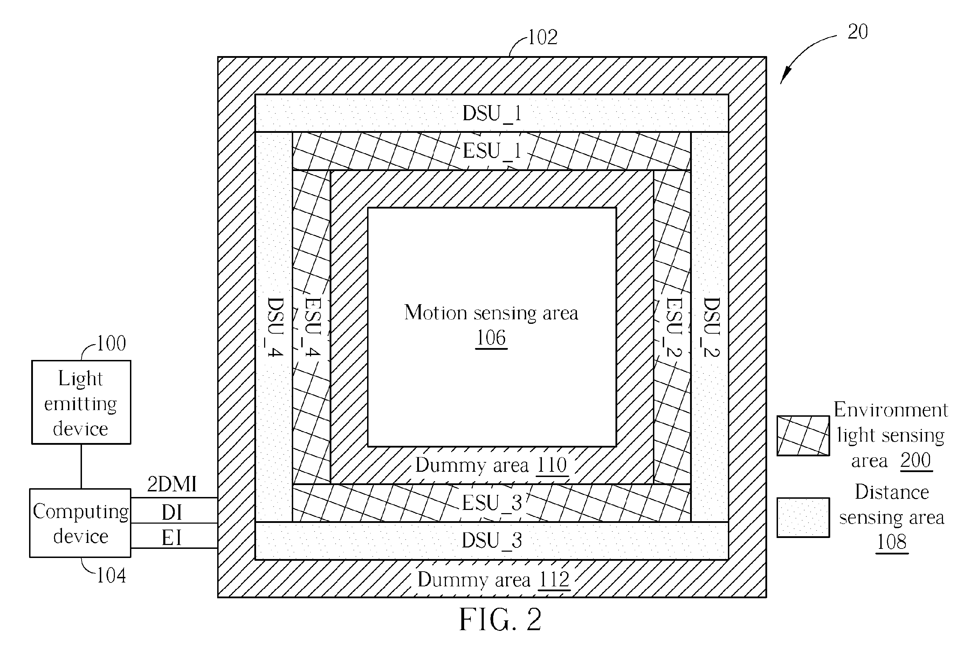

Please refer to FIG. 2, which is a schematic diagram of a motion sensing system 20 according to an embodiment of the present invention. The motion sensing system 20 is similar to the motion sensing system 10 shown in FIG. 1, thus the components and signals with similar functions use the same symbols. Different from the motion sensing system 10 shown in FIG. 1, the motion sensing system 20 further comprises an environment light sensing area 200 positioned between the motion sensing area 106 and the distance sensing area 108. The environment light sensing area 200 is utilized for sensing the light of a frequency range FR2, to generate environment light information EI to the computing device 104. In an embodiment, the frequency range FR2 is the frequency range of visible light. The environment light sensing area 200 comprises environment light sensing units ESU_1-ESU_4 positioned at a top side, a right side, a bottom side and a left side of the motion sensing area 106, respectively, for sensing the intensity of the light of the frequency range FR2 and generating the corresponded currents as the environment light information EI. In an embodiment, the environment light sensing units ESU_1-ESU_4 can be light sensing components arranged in a row (e.g. a 1*M pixel array), and are not limited herein. According to the environment light information EI, the computing device 104 determines the intensity of the light of the environment where the motion sensing system 20 is located, so as to adjust the intensity of the light LIG generated by the light emitting device 100 and/or the number of the distance sensing units DSU_1-DSU_4 that are enabled. For example, when the computing device 104 determines the motion sensing system 20 is under a bright circumstance according to the environment light information EI, the computing device 104 may reduce the intensity of the light LIG and/or decrease the number of the distance sensing units DSU_1-DSU_4 that are enabled. When the computing device determines the motion sensing system 20 is under a dark circumstance according to the environment light information EI, the computing device 104 may raise the intensity of the light LIG and/or increase the number of the distance sensing units DSU_1-DSU_4 that are enabled. The power consumption of the motion sensing system 20 can be optimized, therefore.

Please note that, the computing device 104 may also adjust the number of the environment light sensing units ESU_1-ESU_4 that are enabled according to the environment light information EI. In an embodiment, when environment light information EI indicates that the motion sensing system 20 is under a bright circumstance, the computing device 104 may only enable the environment light sensing unit ESU_1. In such a condition, the motion sensing system 20 only uses the environment light sensing unit ESU_1 to sense the intensity of light of the frequency range FR2 and output the corresponded current as the environment light information EI. When the intensity of the light of the frequency range FR2 in the circumstance where the motion sensing system 20 is located becomes weaker, the computing device 104 enables the environment light sensing units ESU_1 and ESU_2 (i.e. increase the number of the environment light sensing units ESU_1-ESU_2 that are enabled) for rising the sensitivity of the environment light sensing area 200, and so on.

According to different applications and design concepts, those with ordinary skill in the art may observer appropriate alternations and modifications. For example, a dummy area can be added between the motion distance sensing area 108 and the environment light sensing area 200 for reducing the crosstalk between the motion distance sensing area 108 and the environment light sensing area 200.

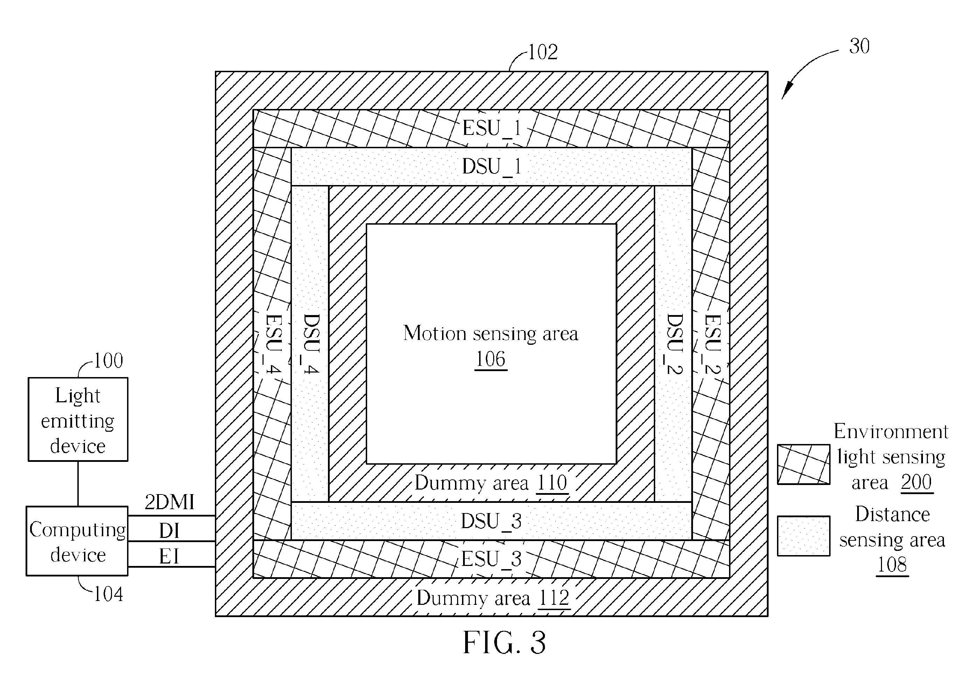

Please refer to FIG. 3, which is a schematic diagram of a motion sensing system 30 according to an embodiment of the present invention. The motion sensing system 30 is similar to the motion sensing system 20 shown in FIG. 2, thus the components and signals with similar functions use the same symbols. In comparison with the motion sensing system 20, the environment light sensing area 200 of the motion sensing system 30 is changed to be positioned between the distance sensing area 108 and the outer edge of the motion sensing device. The detail operations of the motion sensing system 30 are similar to the motion sensing system 20, and are not narrated herein for brevity.

To sum up, the motion sensing device and the motion sensing system of the above embodiments detects the motion information on a 2D plane (e.g. X-Y plane) within the detecting range through the motion sensing area and detects the distance information of a third axis (e.g. the Z-axis) within the detecting range via the distance sensing area. Therefore, the motion sensing system of the above embodiment accurately determines the motion trace (e.g. a gesture) performed by the user in the detecting range according to the information generated by the motion sensing device.

## Claims

1. A motion sensing device (102) for a motion sensing system (10) having a light emitting device (100) for generating light of a certain frequency range, **characterized by** the motion sensing device (102) comprising:
a motion sensing area (106) which comprises array, for sensing light of the frequency range to generate two-dimensional motion information (2DMI) of a first axis and a second axis; and
a distance sensing area (108), positioned between the of the motion sensing area (106) and the outer edge of the motion sensing device (102), for sensing light of the frequency range to generate distance information (DI) of a third axis.

2. The motion sensing device (102) of claim 1, **characterized in that** the distance sensing area (108) comprises:
a first distance sensing unit (DSU1), positioned at a first side of the motion sensing area (106) for sensing the light of the frequency range and outputting a first current as the distance information (DI);
a second distance sensing unit (DSU2), positioned at a second side of the motion sensing area (106) for sensing the light of the frequency range and outputting a second current as the distance information (DI);
a third distance sensing unit (DSU3), positioned at a third side of the motion sensing area (106) for sensing the light of the frequency range and outputting a third current as the distance information (DI); and
a fourth distance sensing unit (DSU4), positioned at a fourth side of the motion sensing area (106) for sensing the light of the frequency range and outputting a fourth current as the distance information (DI).

3. The motion sensing device (102) of claim 1 or 2, **characterized in that** the frequency range is in the infrared frequency range.

4. The motion sensing device (102) of any of claims 1-3, **characterized by** further comprising:
a first dummy area (110), positioned between the motion sensing area (106) and the distance sensing area (108); and
a second dummy area (112), positioned between the distance sensing area (108) and the outer edge of the motion sensing device (102).

5. The motion sensing device (102) of any of claims 1-4, **characterized by** the light emitting device (100) generating light of a certain intensity and further comprising an environment light sensing area (200), for sensing light of a further frequency range to generate environment light information (EI) and for controlling the intensity of the light generated by the light emitting device (100) according to the environment light information (EI).

6. The motion sensing device (102) of claim 5, **characterized in that** the environment light sensing area (200) is positioned between the motion sensing area (106) and the distance sensing area (108).

7. The motion sensing device (102) of claim 5, **characterized in that** the environment light sensing area (200) is positioned between the distance sensing area (108)) and the outer edge of the motion sensing device (102).

8. The motion sensing device (102) claims 5 or 6, **characterized in that** the environment light sensing area (200) comprises:
a first environment light sensing unit (ESU1), positioned at a first side of the motion sensing area (106) for sensing the light of the further frequency range and outputting a first current as the environment light information (EI);
a second environment light sensing unit (ESU2), positioned at a second side of the motion sensing area (106) for sensing the light of the further frequency range and outputting a second current as the environment light information (EI);
a third environment light sensing unit (ESU3), positioned at a third side of the motion sensing area (106) for sensing the light of the further frequency range and outputting a third current as the environment light information (EI); and
a fourth environment light sensing unit (ESU4), positioned at a fourth side of the motion sensing area (106) for sensing the light of the further frequency range and outputting a fourth current as the environment light information (EI).

9. The motion sensing device (102) of any of claims 5-8, **characterized in that** the further frequency range is in the visible light frequency range.

10. A motion sensing system (10), **characterized by** comprising:
a light emitting device (100), for generating light of a certain frequency range;
a motion sensing device (102) according to any of claims 1-9.

11. A method of generating two-dimensional motion information (2DMI) of a first axis and a second axis and distance information (DI) of a third axis in a motion sensing system (10) having a light emitting device (100) in a motion sensing system (10) by using the motion sensing device (102) according to any of claims 1-4.

12. A method of controlling light intensity of light generated by a light emitting device (100) in a motion sensing system (10) by using the motion sensing device (102) according to any of claims 5-9.
